# EUROPEAN PATENT SPECIFICATION

(11) **EP 4 465 039 B1**
(45) Date of publication and mention of the grant of the patent: **08.10.2025**
(21) Application number: 23173635.6
(22) Date of filing: 16.05.2023
(51) Int. Cl.: G01N 30/91

(54) **DEVICE AND METHOD FOR CARRYING OUT AUTOMATED RADIOCHEMICAL PURITY ANALYSIS OF PET TRACERS**
VORRICHTUNG UND VERFAHREN ZUR AUTOMATISIERTEN RADIOCHEMISCHEN REINHEITSANALYSE VON PET-TRACERN
DISPOSITIF ET PROCÉDÉ POUR EFFECTUER UNE ANALYSE DE PURETÉ RADIOCHIMIQUE AUTOMATISÉE DE TRACEURS TEP

(43) Date of publication of application: 20.11.2024
(73) Proprietor: Trasis S.A., 4430 Ans (BE)
(72) Inventor: MORELLE, Jean-Luc, 4000 Liege (BE); FRANCI, Xavier, Andenne (BE); DUMONT, Philippe, Liege (BE); BAPLUE, Frédéric, 4557 Fraiture (Tinlot) (BE)
(74) Representative: AWA Benelux

(56) References cited:
- CA-C- 2 745 727
- GB-A- 1 356 234
- US-A1- 2015 355 149
- "Automated amino acid analyzer", INTERNATIONAL LABORATORY,, vol. 10, no. 4, 1 May 1980 (1980-05-01), pages 79 - 82, XP001344042

## Description

### Field of the Invention

The present invention relates to a device intended to automatically perform Thin Layer Chromatography (TLC) for assessing radiochemical purity analysis of PET, for *Positron Emission Tomography*, and SPECT, for *Single Photon Emission Computed Tomography*, radiotracers. In particular the invention relates to consumables made of new TLC strip and migration chamber.

The invention also relates to the method based on the use of this device.

### Background and Prior Art

Radiopharmaceuticals tracers, such as Positron Emission Tomography (PET) or Single Photon Emission Computed Tomography (SPECT), agents are required to be fully characterized with a variety of different analytical techniques prior to administration to a patient. One of these techniques is the assessment of RadioChemical Purity (RCP). RCP determination is typically achieved by High Performance Liquid Chromatography (HPLC) or Thin Layer Chromatography (TLC). HPLC and TLC are both instrumental techniques but differ in that HPLC requires a fully integrated instrument platform with high pressure capability while, for thin layer chromatography, separate devices are used for each unit operation, usually at or close to atmospheric pressure, and afford higher flexibility supporting on-line or off-line operation.

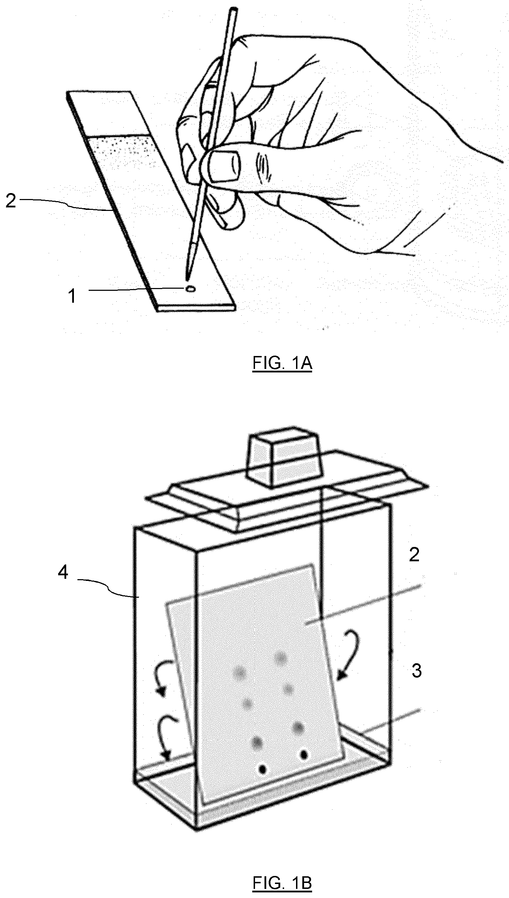

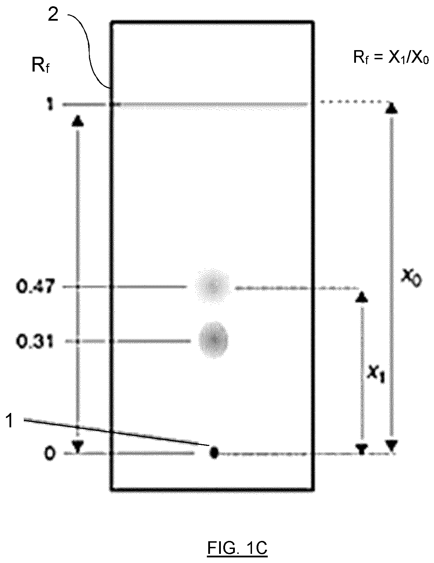

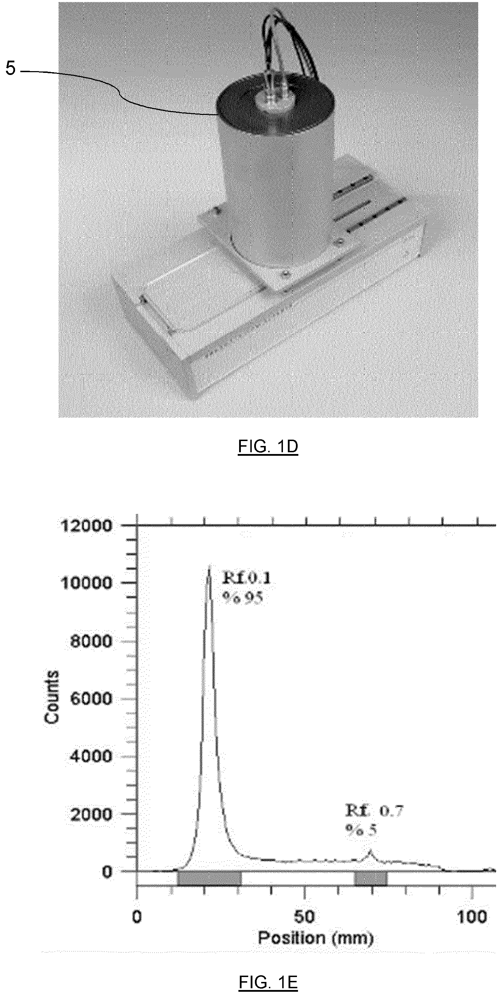

TLC is performed by spotting a sample solution 1 to be tested on a TLC silica-based solid support 2 (FIG. 1A), followed by migration and separation of the spotted sample across the TLC plate by capillarity effect when the plate, being the stationary phase, is in presence of an eluent 3, the latter called the mobile phase (FIG. 1B). The migration is usually conducted inside a developing chamber 4. The relative affinities towards the stationary phase of the different constituents present in the sample and carried along by the mobile phase allows the separation along the plate (FIG. 1B). As shown in FIG. 1C, each compound that migrated is characterized by a retention factor, R_{f}, defined as the ratio between the distance migrated Xᵢ over the total distance covered by the solvent X₀, with R_{f} = Xᵢ/X₀. A given constituent in a specific mobile phase over a specific stationary phase will have a specific R_{f}. This allows defining the identity of a radioactive constituent. The analysis of the plate after migration is usually performed by scanning the migration path on the plate with an activity detector 5 (see example in FIG. 1D). The radioactivity signal measured along the plate thus shows peaks corresponding to the different radioactive constituents of the sample. The profile of the signal versus position depicts a chromatogram (see example in FIG. 1E). The areas of the peaks can be calculated to determine the ratio between the different radioactive species. The radiochemical purity of the radioactive tracer can be obtained from these ratios.

The detection of compounds labeled with radioisotopes after separation by thin-layer chromatography requires special equipment, laboratory facilities, and compliance practices. Consequently, it is a method restricted to laboratories with a suitable infrastructure and trained operators. Common applications include the assay of radiopharmaceuticals and medical diagnostic agents and studies of the fate, distribution and modification of labeled compounds in biological and environmental systems. TLC is often the preferred option for these applications because it can tolerate the application of dirty samples and all radioactivity applied to the layer is available for detection. In column separations such as in HPLC, on the other hand, only the eluted compounds are detected.

Utilization of radiopharmaceuticals, such as PET or SPECT tracers, in clinical settings is limited by the short half-life of these reagents, which is typically measured in minutes or hours. Due to such short half-lives, radioactive agents analysis has to be completed rapidly. To achieve this, multiple operations need to take place simultaneously, requiring the use of highly trained personnel. In addition, safety precautions regarding the use of radioactive materials, especially to prevent any radiation dose to the operator, must be implemented.

This is even more relevant with regard to thin layer chromatography analysis that is made of the following unit operations:
- spotting of the sample on a TLC plate (operation No. 1) ;
- migration of the sample along the TLC plate by capillarity (operation No. 2); and
- reading of the TLC plate with an activity detector (operation No. 3).

Although these operations are conducted manually most of the time, some automated solutions exist on the market to conduct one or the other of these operations separately, but no solution encompassing all three operations efficiently can be found.

For example, regarding the spotting operation (operation No. 1), the "Nanomat 4" (from Camag, Muttenz, Switzerland; *https:*//*www.camaq.com*/*product*/*camaq-nanomat-4; accessed on March 27^{th}, 2023*) makes use of a glass capillary which is inserted into a metal holder and attached to the applicator head by a magnet. This allows it to be lowered and lifted from the plate surface under controlled conditions using a spring mechanism. However the operator must fill manually the glass capillary before its insertion on the metal holder and the apparatus contains no shielding towards radiation. The "Autospotter" (from Analtech, Newark, USA; www.analtech.com; accessed on March 27th, 2023) is a semi-automated contact transfer spotter in which samples are loaded into a series of syringes with blunt Teflon tips to minimize sample creep back during application. The "Linomat 5" (from Camag, Muttenz, Switzerland; https://www.camag.com/product/camag-linomat-5; accessed on March 27th , 2023) and "ATS 4" (from Camag, Muttenz, Switzerland; https://www.camag.com/product/camag-automatic-tlc-sampler-4-ats-4; accessed on March 27th , 2023) are spray-on devices that employ a motor driven syringe as the sample reservoir and a nitrogen, or compressed air atomizer to spray the sample onto the layer in the form of spots, bands or rectangles. These devices are not intended to be use for sampling radioactive solution.

Regarding the migration of the sample along the TLC plate (operation No. 2), semi-automated or automated horizontal or vertical developing chambers are found on the market (see for example: "HPTLC Vario System" from Camag, Muttenz, Switzerland; https://www.camag.com/product/camag-hptlc-vario-system; accessed on March 27th, 2023; "Horizontal developing chamber" from Camag, Muttenz, Switzerland; https://www.camag.com/product/camag-horizontal-developing-chamber accessed on March 27th, 2023*;* "ADC 2" from Camag, Muttenz, Switzerland, hitps.//www.camag.com/product/camag-automatic-developing-chamber-2-adc-2; accessed on March 27th, 2023*;* "OPLC 50" from JC scientific, Hong-Kong, https://aspirescientific.in/oosu.html accessed on March 27th, 2023*;* "HTLE-7002" from CBS Scientific Company Inc., San Diego, USA https://www.cbsscientific.com/collections/all, accessed on March 27th ,2023*).* None of these chambers includes radiation shielding, which would require the operator to install these devices in shielded hot cells, rendering the process even more painstaking. Further, upstream, the plate transfer from the spotter apparatus to the developing chamber must be performed manually.

With regard to the reading of the TLC plate with an activity detector (operation No. 3), the "GITA" (from Elysia-Raytest, Liège, Belgium; https://www.elysia-raytest.com/en/cataloglight/gita~669c2dad-d600-4429-aa5f-8e73bc23ca7b; accessed on March 27th , 2023) is a radiochromatography scanner using a combination scintillator and photomultiplier tube detectors. The "RITA" (from Elysia-Raytest, Liège, Belgium; https://www.elysia-raytest.com/en/cataloglight/rita~2ec2c387-4eb6-4d26-afeb-13c8f5ab57bb; accessed on March 27th , 2023*)* and the AR-2000 (from Eckert&Ziegler Radiopharma, Berlin, Germany https://medical.ezag.com/en/products/ar-2000/; accessed on March 27th, 2023) are scanners using a gas-filled proportional detector. Proportional detectors can be used for the detection of all radioisotopes. Again, within these systems, only the data acquisition is automated, while the TLC plate must be installed manually within the apparatus.

To date, there is no solution encompassing all three unit operations of TLC technique efficiently, reproducibly and in a safe way for the operator. Thus there remains a need for a system that simplifies, streamlines and automates TLC characterization of radiopharmaceuticals, protecting the operator from any radiation dose during the whole process.

Documents WO2016130458A1 and CA2745727C, which are considered to be the closest prior art, describe automated based quality control system to perform quality control testing on a radiopharmaceutical solution shortly after synthesis. While several tests are effectively proposed within these documents, in an automated manner, without user interference, RCPs are proposed to be assessed by HPLC. TLC technique is not addressed.

Document US11002717B2 describes a device for automated characterization of radioactive analytes that provides an integrated system with liquid handling and plate reading components. However, those systems are enabled by palettes where sample interacts with reagents and features within the palette resulting in optical signals that can be detected outside the palette and correlated with specific sample parameters. Thus, the techniques are non-chromatographically based (e.g. nor TLC or HPLC-based techniques) and the apparatus is meant to be manipulated within a shielded hot cell as it is not shielded itself. The mentioned radiation shield plate is only meant to preserve the optical plate reader instrument from interferences with radiation coming from the radioactive substance.

Document US2015/0355149A1 relates to a method for carrying out thin-layer chromatography in which a liquid sample is applied to a separating layer, in which a mobile phase is subsequently applied to the separating layer and brought into contact with the sample, and in which, after a development phase, a thin-layer chromatogram is produced. The liquid sample is taken up from a sample storage container with the aid of an autopipette using a new pipette tip for each sample application operation and applied to the separating layer. Still according to this document, an angular contact device for the application of the mobile phase to the separating layer is provided. The angular contact device is mounted in a pivotable manner and can be moved to and from between a contact position, in which an angled-off end region of the contact device is in contact with the separating layer, and a starting position. The contact device consists of a porous and capillary-active material. A second end region is mounted in a pivotable manner in a storage container, so that mobile phase is conveyed continuously out of the storage container into the angled-off end region owing to capillary forces. When or as long as the contact device is in the contact position, the mobile phase is transported via the angled-off end region onto the separating layer. Thus, the method and device described in this document only address unit operations No 1 and 2, and is not meant to be use with radioactive substances.

### Aims of the Invention

The present invention aims the complete automatization of the radiochemical purity (RCP) assessment of radiolabeled compounds by thin layer chromatography (TLC) while avoiding any manual intervention.

A further goal of the present invention is to provide an automated method that allows to obtain characteristics, for example migration time, resolution, solvent front position and retardation factors for radioactive compounds similar to those obtained by the conventional TLC method.

In particular it is aimed according to the invention not to have a migration time overcoming 15 minutes.

A further aim of the invention is to minimize the exposition of the operators to radioactivity and to avoid the movement of a heavy shielded detector, as it is difficult to move it quickly.

### Summary of the Invention

The present invention relates to a device for carrying out automated radiochemical purity analysis of radiolabelled solution samples on the basis of a chromatogram obtained by Thin Layer Chromatography or TLC, comprising:
- a TLC strip holder assembly, called hereafter holder assembly, consisting of:
   ∘ a disposable TLC strip comprising an upper cover and a lower TLC band, said TLC band being sealed in a sealing area at a first end to the upper cover, the other end of the TLC band being under the form of a tapered tip free to be parted from the corresponding end of the upper cover, said upper cover being provided with a first orifice or driving orifice located at the other end of the upper cover, a second orifice or eluent orifice located above the tapered tip of the TLC band and a third orifice or spotting orifice located above the TLC band, at a distance from the second orifice;
   ∘ a reusable TLC strip holder, called hereafter holder, comprising an eluent reservoir located beneath an upper surface, said holder further having an opening to communicate with the eluent reservoir and matching the second orifice of the upper cover when the TLC strip is fully inserted in the holder, and having a sharp inclined guiding entry to channel the tapered tip of the TLC band downwards into the eluent reservoir, the tapered tip being parted from the upper cover upon insertion thereof into the eluent reservoir, while the remainder of said TLC strip remains guided by retaining notches;
- a stationary radioactivity detector located in line with the holder and provided with shielding parts;
- an automatic equipment comprising a pipettor capable to accommodate disposable pipette tips, to withdraw or deliver a fluid into and out of each pipette tip, and capable to position pipette tips respectively in the spotting orifice, in the eluent orifice and in the driving orifice to, respectively, dispense a spot of radiolabelled solution sample on the TLC band, provide the eluent reservoir with an eluent, also called mobile phase, and displace the TLC strip along the guiding grooves and outside of the holder towards the radioactivity detector.

According to preferred embodiments, the device further comprises one or more of the following characteristics:
- the upper cover is a transparent plastic sheet and the TLC band of the TLC strip is composed of an aluminium or a plastic supporting sheet coated with a stationary phase such as silica gel, C18 modified silica, silica with chiral selector, alumina, polyamide, or of a glass microfiber chromatography paper impregnated with a silica gel, or of cellulose;
- the device is also provided with an optical system, such as a camera, that can locate the eluent front and any visual migration features along the TLC plate;
- said reusable holder also comprises a groove providing clearance to the extremity of the driving pipette tip while it displaces the TLC strip in or out of the holder;
- the eluent reservoir is designed to accommodate an eluent volume between 200 and 600 µL;
- the upper plastic cover is in polyethylene, COC for Cyclic Olefin Copolymer or polyethylene terephthalate.

The present invention relates to a method for carrying out automated radiochemical purity analysis of a radiolabelled solution sample by TLC, using the device as described above, said method comprising the successive steps of :
- placing a holder assembly, with TLC strip initially positioned in the holder so that the eluent orifice matches the opening of the eluent reservoir;
- providing the automatic pipettor with a first tip and withdrawing a sample of a radiolabelled compound;
- moving the first tip in the spotting orifice and dispensing a spot of the radiolabelled compound sample onto the TLC band surface ;
- discarding the first tip, providing the automatic pipettor with a second tip and moving the second tip to draw a defined quantity of eluent from an external source;
- moving the second tip in the eluent orifice and dispensing the eluent into the eluent reservoir;
- letting the mobile phase migration unfold for a time allowing sufficient mobile phase migration, corresponding to an appropriate eluent front position measured and verified by the optical system;
- discarding the second tip, providing the automatic pipettor with a third tip, moving the third tip into the driving orifice and driving the TLC strip out of the holder towards and across the radioactivity detector field of view in order to obtain a chromatogram, the driving velocity profile being adapted to the type of detector and activity level; and
- analysing the chromatogram and assessing the radiochemical purity of the radiolabelled compound.

According to preferred embodiments, the method further comprises one or more of the following characteristics :
- the eluent comprises a mixture of organic or inorganic solvents, in different ratios;
- the organic solvents are selected from the group consisting of acetonitrile, methanol, ethanol, acetic acid and ethyl acetate and the inorganic solvents are selected from the group consisting of water, saline, ammonium acetates and sodium citrate;
- the sample spot volume is between 0.5 and 5.0µL;
- the sample spot volume is between 0.5 and 1.0µL.

### Brief Description of the Drawings

FIG. 1A to FIG. 1E represent an example of the prior art method to measure RCP with TLC, including manual interventions.
FIG. 2 represents the TLC strip according to the present invention.
FIG. 3A and FIG. 3B represent an embodiment of the TLC migration chamber according to the present invention, respectively without a TLC strip inserted in the migration chamber, and with a TLC strip partially inserted in the migration chamber.
FIG. 4 represents a cross-sectional view of the TLC chamber of FIG. 3 with the TLC strip depicted in FIG.2 completely inserted in, highlighting the eluent reservoir.
FIG. 5 represents the TLC consumable according to the present invention, consisting of the assembly of the TLC strip of FIG. 2 and the migration chamber of FIG. 3.
FIG. 6 represents the three main steps of the automated process according to the invention, using the TLC consumable of FIG. 5.
FIG. 7 represents the displacement of the TLC strip towards the radioactivity detector, after the migration end.
FIG. 8 is a transversal view of the TLC consumable within the whole device according to the invention and including a radioactivity TLC detector.
FIG. 9 is a graphical representation of the elution time as a function of elution path according to four different methods, two methods as described in the present invention and two methods according to prior art.
FIG. 10A and FIG. 10B show a chromatogram comparison between conventional TLC and TLC according to the present invention in the case of assessing resolution for a sample of 18F-FDG containing 6% 18F-FTAG.

### Description of a Preferred Embodiment of the Invention

The purpose of the present invention is to provide a device that allows the automation of the whole process of RCP determination of a radiolabeled sample by TLC, including sample spotting on a TLC plate, sample migration over the TLC plate and TLC plate reading.

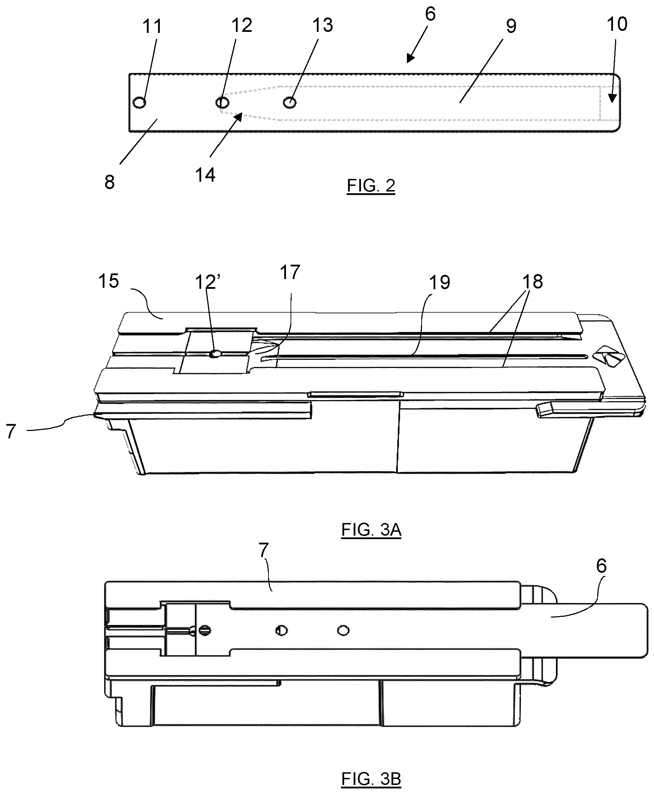

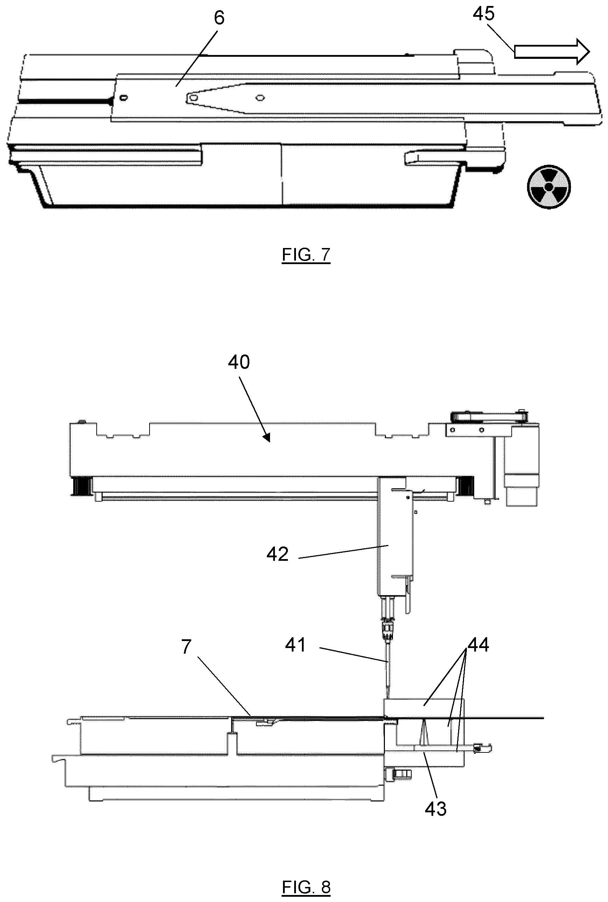

In particular, the device includes a TLC strip holder assembly 20, called hereafter the "holder assembly", consisting of a disposable TLC strip 6 (FIG. 2) and a reusable TLC strip holder 7 (FIG. 3), called hereafter the "holder", a stationary radioactivity detector 43 (FIG. 8) and an automatic equipment 40 (FIG. 8) comprising a pipettor.

The disposable TLC strip 6 shown on FIG. 2 comprises an upper cover 8 and a lower TLC band 9. The TLC band 9 is sealed, preferably by glueless sealing, in a sealing area 10 at a first end to the upper cover 8, the other end of the TLC band 9 being under the form of a tapered tip 14 free to be parted from the corresponding end of the cover 8. Both parts 8, 9 being attached together at one end are able to move together. Three holes are drilled on the plastic cover on the opposite side of the sealing area 10. A first hole 11, called the "driving orifice", allows the translational movement of the TLC strip 6 thanks to the introduction of a pipette tip into the driving orifice 11. The second orifice 12, called the "eluent orifice", allows to provide the eluent reservoir 16 with an eluent (see below) and the third orifice 13, called the "spotting orifice", is used to dispense a spot of a sample to be analyzed on the TLC band 9.

In a preferred embodiment of the present invention, the cover 8 is a transparent plastic sheet and the TLC band 9 is composed of an aluminum or plastic supporting sheet coated with a stationary phase such as silica gel, C18 modified silica, silica with chiral detector, alumina, polyamide, or of a glass microfiber chromatography paper impregnated with a silica gel or of cellulose. The characteristics of the silica gel absorbent are for example:
- specific surface : approx. 500 m2/g;
- medium pore width : 60 Å;
- specific pore volume : 0,75 ml/g;
- particle size : 5-17 µm.

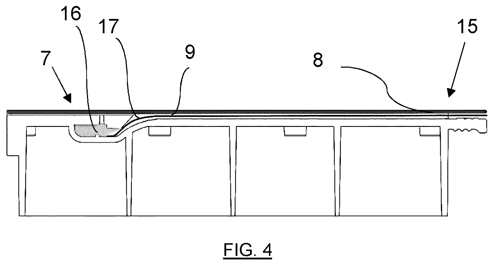

The reusable holder 7 shown on FIG. 3A, FIG. 3B and FIG. 4 comprises an eluent reservoir 16 located beneath the upper surface 15 which is intended to contain the eluent required for migration along the TLC band 9, a sharp inclined guiding entry 17 meant to channel the tapered tip 14 of the TLC band 9 into the eluent reservoir 16 (shown on FIG. 4) and one or more retaining notches 18, preferably two retaining notches 18, to guide the TLC strip 6. Moreover, the holder 7 comprises a groove 19 providing clearance to the extremity of a driving pipette tip 41 while it displaces the TLC strip 6 in or out of the holder 7. The guiding entry 17 advantageously prevents evaporation of the eluent.

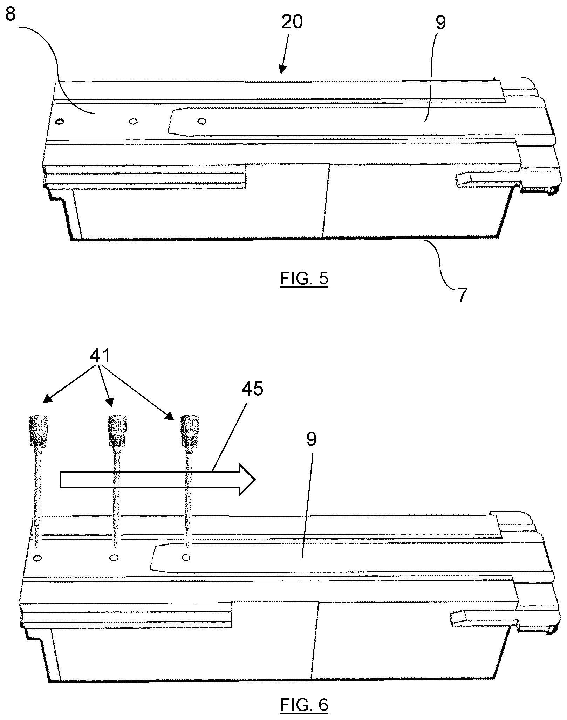

The holder assembly 20 results from the assemblage of the two parts described above, the disposable TLC strip 6 and the reusable holder 7, as shown on FIG. 5.

The holder assembly 20 is to be used with an automatic equipment comprising a pipettor that allows the completely automatic RCP determination by TLC of radiolabeled solution samples. After placement of a holder assembly 20, with TLC strip 6 initially positioned in the holder 7 so that the eluent orifice 12 matches the opening 12' of the eluent reservoir 16 and so that the TLC band 9 is positioned at the entry 17 of the eluent reservoir 16 in order to locate the tip 14 thereof inside the eluent reservoir 16 (see FIG. 4), in said automatic equipment, the RCP analysis is performed according to the following automated steps (as shown on FIG. 6):
1. The automatic pipettor 42 is provided with a first tip 41 and a sample of a radiolabelled compound is withdrawn;
2. The first tip 41 is moved in the spotting orifice 13 and the radiolabelled compound sample is spotted on the coated side of the TLC band 9 of the TLC strip 6. Preferably, the sample spot volume is between 0.5 and 5.0 µL;
3. The first tip 41 is discarded, the automatic pipettor 42 is provided with a second tip 41 and the second tip 41 is moved to draw a defined quantity of eluent from an external source. The second tip 41 then moves in the eluent orifice 12 and the eluent is dispensed into the eluent reservoir 16, which makes the migration start immediately as the TLC band tapered tip 14 is located inside the eluent reservoir 16. The eluent is preferably a mixture of organic solvents such as acetonitrile, methanol, ethanol, ethyl acetate or inorganic solutions such as water, saline, ammonium acetate, sodium citrate, and any combination of thereof. Preferably, the eluent volume is comprised between 200 and 600µL.
4. The mobile phase migration is let unfold for a time allowing a sufficient mobile phase migration, corresponding to an appropriate solvent front position measured and verified by an optical system. The time to reach for example a 80 mm migration from the sample spot depends on the nature of the eluent, and it can last between 5 to 20 minutes
5. The second tip 41 is discarded, the automatic pipettor 42 is provided with a third tip 41 which then moves into the driving orifice 11 and displaces the TLC strip 6 out of the holder 7 towards and across the radioactivity detector 43 field of view in order to obtain a chromatogram (FIG. 7). The driving velocity profile adapted to the type of detector and activity level.
6. The chromatogram is analysed and the radiochemical purity of the radiolabelled compound is assessed based on this analysis.

An embodiment of the automatic equipment 40 including the radioactivity TLC detector 43 is shown on FIG. 8. The translational motion of the TLC strip 6 is ensured by a pipette tip 41 of a pipettor robot 42, as the pipette tip 41 is introduced into the driving orifice 11 of the plastic cover 8. The speed of the translational motion depends on the level of activity present on the TLC band 9, it can typically vary from 0.1mm/sec to 10mm/sec. The radioactivity detector 43 can be positioned either above or below the TLC band 9.

### Results of experiments

Spotting and migration of radioactive substances have been tested using a mixture of 18F-FDG (18F-FluoroDeoxyGlucose) and 18F-FTAG (18F-FluoroTetraAcetylGlucose) which is a close impurity of 18F-FDG, as a reference. This reference has been used for two main reasons: 18F-FDG is the most common radiotracer used in PET and the synthesis method for the production of 18F-FDG is likely to produce radioactive impurities, such as 18F-FTAG, that are close to the 18F-FDG peak. Having both 18F-FDG and 18F-FTAG in a sample will thus allow a proper assessment of the resolution provided by the TLC method described herein.

Within the described following experiments, the state of the art manual TLC method (FIG. 1) is compared to the automated TLC method using the TLC strip holder assembly 20, which combines the TLC strip 6 and the TLC strip holder 7, according to the present invention, in order to ensure similar results between the two methods and relevance of the present invention. The target for the migration time of 18F-FDG, using an acetonitrile/water [95:5] solution, is not to exceed 15 minutes. The complete process (spotting/migration/reading) should not exceed 25 minutes. If 10 minutes are required for the reading process, the time for spotting and migration should not exceed 15 minutes.

### 1. Elution Time

The objective of the experiments described herein is to compare the elution time of a solvent mixture on a TLC plate according to the present invention, using the holder assembly 20 which combines a TLC strip 6 and a holder 7 (see FIG. 2, FIG. 3A and FIG. 3B) and according to the state of the art method as depicted for example in Fig. 1B. For the experiment using the TLC plate according to the present invention, 400µL of an eluent mixture (acetonitrile/water [95:5]) is added to the holder 7 and the elution time of this solvent mixture on the TLC band is recorded. The experiment has been repeated twice. Measure of elution times for the state of the art method has been carried out on two different TLC plates. The first experiment determined the elution time of a solvent mixture (acetonitrile/water [95:5]) along a silica gel on aluminium TLC plate, the second one determined the elution time of a same composition solvent mixture but along a silica gel on polyester TLC plate.

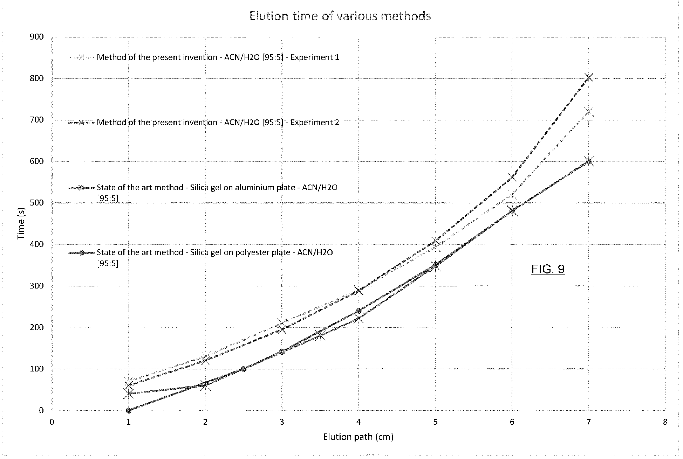

FIG. 9 graphically shows the elution rate for those experiments. While elution times obtained using the holder assembly 20 are slightly longer (dotted curves, 15-20% longer) than those obtained with the state of the art method, they are still within the defined limit of 15 minutes. Moreover, the elution profiles between the two set of experiments are similar, demonstrating that the horizontal orientation of the TLC plate in the method according to the present invention has no significant effect on the mobile phase velocity. This is expected as capillary forces easily exceed those of gravity.

### 2. Migration profile

The objective of the experiments described herein is to determine the minimum eluent migration distance to effectively separate the 18F-FDG and 18F-FTAG peaks. 18F-FDG and 18F-FTAG being structurally similar, achieving a significantly different migration profile allowing their separation on a TLC plate is non-trivial. TLC elution data of four different experiments are given in Table 1. These elution profiles have been obtained by means of the automated TLC method of the present invention using the holder assembly 20. The data show that, within the experimental conditions, the minimum path length between the spotting position and the eluent front for a proper separation of the 18F-FDG and 18F-FTAG peaks is of about 6.5 cm, a value of 7 to 8 cm being strongly recommended.

### 3. Resolution

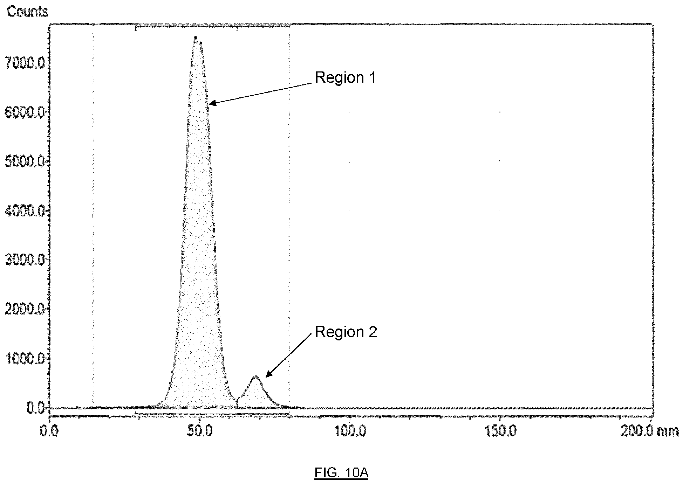

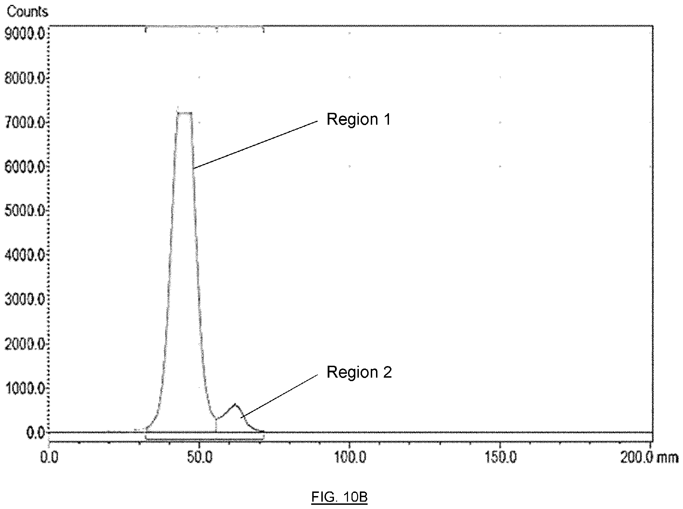

The objective of the experiments described herein is to assess the resolution between the 18F-FDG and 18F-FTAG peaks. A sample of 18F-FDG containing 6% of 18F-FTAG was analyzed and the data are shown in Table 2. Using the state of the art TLC method (as depicted in FIG. 1), the 18F-FDG/18F-FTAG resolution is 1.23 mm (FIG. 10A), while a similar resolution of 1.4 mm is achieved in the case of using the holder assembly 20 according to the present invention (FIG. 10B). The data show that the resolution obtained by the two methods is equivalent when the sample volume to be spotted on the TLC plate is between 0.5 and 1 µL.

### 4. Conclusions of the experiments

The elution time of the eluent on the TLC plate according to the present invention is slightly higher than within the conventional TLC system, but clearly below the targeted 15 minutes.

The minimum migration path for a proper separation of 18F-FDG and 18F-FTAG peaks is 6.5cm, the recommended path length being 7 to 8 cm.

The volume sample spot size should be between 0.5 and 1µL in order to reach an acceptable resolution between 18F-FDG and 18F-FTAG from a 18F-FDG solution containing 6% of 18F-FTAG, considered to be a worst-case scenario.

**Table 1**

| **Sample name** | **Mobile phase** | **Sample V (µL)** | **TLC type** | **Rf 18F-FDG** | **Rf 18F-FTAG** | **ΔRf** | **Comment** | **Width (cm)** | **Path (cm)** | **Elution time (sec)** |
|---|---|---|---|---|---|---|---|---|---|---|
| FDG2 | ACN/H2 O [95:05] | 2 | Silicagel on aluminium | 0.568 | 0.757 | 0.189 | Beginning of separation | 0.8 | 6.4 | 654 |
| FDG3 | ACN/H2 O [95:05] | 2 | Silicagel on aluminium | 0.667 | 0.667 | 0.0 | One large peak | 0.8 | 5 | 425 |
| FDG4 | ACN/H2 O [95:05] | 2 | Silicagel on aluminium | 0.652 | 0.652 | 0.0 | One large peak | 0.8 | 4 | 400 |
| FDG5 | ACN/H2 O [95:05] | 2 | Silicagel on aluminium | 0.657 | 0.657 | 0.0 | One large peak | 0.8 | 3 | 273 |

**Table 2**

| **Sample name** | **Mobile phase** | **Sample V (µL)** | **TLC type** | **Rf 18F-FDG** | **Rf 18F-FTAG** | **ΔRf** | **FWHM* 18F-FDG (mm)** | **FWHM 18F-FTAG (mm)** | **Resolution** |
|---|---|---|---|---|---|---|---|---|---|
| FDG-F | ACN/H2O [95:05] | 1 | Silicagel on aluminium | 0.473 | 0.730 | 0.257 | 8.74 | 7.34 | 1.23 |
| FDG-F1 | ACN/H2O [95:05] | 0.5 | Silicagel on aluminium | 0.520 | 0.827 | 0.307 | 10.30 | 6.50 | 1.40 |

| | | | | | | | | | |
|---|---|---|---|---|---|---|---|---|---|
| * FWHM = full width at half maximum | | | | | | | | | |

### List of reference numbers

- 1: Sample solution spot
- 2: TLC solid support plate
- 3: Eluent
- 4: Developing (or migration) chamber
- 5: Activity detector
- 6: TLC strip
- 7: TLC strip holder
- 8: Upper cover
- 9: TLC band
- 10: Sealing area
- 11: Driving orifice
- 12: Eluent orifice
- 12': Opening
- 13: Spotting orifice
- 14: Tapered tip
- 15: Upper surface
- 16: Eluent reservoir
- 17: Guiding entry
- 18: Retaining notches
- 19: Groove
- 20: TLC strip holder assembly
- 40: Automatic equipment
- 41: Pipette tip
- 42: Pipettor
- 43: Radioactivity detector
- 44: Shielding
- 45: Translational movement

## Claims

1. A device for carrying out automated radiochemical purity analysis of radiolabelled solution samples on the basis of a chromatogram obtained by Thin Layer Chromatography or TLC, comprising :
- a TLC strip holder assembly (20), called hereafter holder assembly, consisting of:
∘ a disposable TLC strip (6) comprising an upper cover (8) and a lower TLC band (9), said TLC band (9) being sealed in a sealing area (10) at a first end to the upper cover (8), the other end of the TLC band (9) being under the form of a tapered tip (14) free to be parted from the corresponding end of the upper cover (8), said upper cover (8) being provided with a first orifice or driving orifice (11) located at the other end of the upper cover (8), a second orifice or eluent orifice (12) located above the tapered tip (14) of the TLC band (9) and a third orifice or spotting orifice (13) located above the TLC band (9), at a distance from the second orifice (12);
∘ a reusable TLC strip holder (7), called hereafter holder, comprising an eluent reservoir (16) located beneath an upper surface (15), said holder (7) further having an opening (12') to communicate with the eluent reservoir (16) and matching the second orifice (12) of the upper cover (8) when the TLC strip (6) is fully inserted in the holder, and having a sharp inclined guiding entry (17) to channel the tapered tip (14) of the TLC band (9) downwards into the eluent reservoir (16), the tapered tip (14) being parted from the upper cover (8) upon insertion thereof into the eluent reservoir (16), while the remainder of said TLC strip (6) remains guided by retaining notches (18);
- a stationary radioactivity detector (43) located in line with the holder (7) and provided with shielding parts (44);
- an automatic equipment (40) comprising a pipettor (42) capable to accommodate disposable pipette tips (41), to withdraw or deliver a fluid into and out of each pipette tip (41), and capable to position pipette tips (41) respectively in the spotting orifice (13), in the eluent orifice (12) and in the driving orifice (11) to, respectively, dispense a spot of radiolabelled solution sample on the TLC band (9), provide the eluent reservoir (16) with an eluent, also called mobile phase, and displace the TLC strip (6) along the guiding grooves (18) and outside of the holder (7) towards the radioactivity detector (43).

2. The device according to claim 1, wherein the upper cover (8) is a transparent plastic sheet and the TLC band (9) of the TLC strip (6) is composed of an aluminium or a plastic supporting sheet coated with a stationary phase such as silica gel, C18 modified silica, silica with chiral selector, alumina, polyamide, or of a glass microfiber chromatography paper impregnated with a silica gel, or of cellulose.

3. The device according to claim 1, wherein it is also provided with an optical system, such as a camera, that can locate the eluent front and any visual migration features along the TLC plate.

4. The device according to claim 1, wherein said reusable holder (7) also comprises a groove (19) providing clearance to the extremity of the driving pipette tip (41) while it displaces the TLC strip (6) in or out of the holder (7).

5. The device according to claim 1, wherein the eluent reservoir (16) is designed to accommodate an eluent volume between 200 and 600 µL.

6. The device according to claim 2, wherein the plastic upper cover (8) is in polyethylene, COC for Cyclic Olefin Copolymer or polyethylene terephthalate.

7. A method for carrying out automated radiochemical purity analysis of a radiolabelled solution sample by TLC, using the device according to anyone of the preceding claims, said method comprising the successive steps of :
- placing a holder assembly, with TLC strip (6) initially positioned in the holder (7) so that the eluent orifice (12) matches the opening (12') of the eluent reservoir (16), in the device according to claim 1;
- providing the automatic pipettor (42) with a first tip (41) and withdrawing a sample of a radiolabelled compound;
- moving the first tip (41) in the spotting orifice (13) and dispensing a spot of the radiolabelled compound sample onto the TLC band (9) surface ;
- discarding the first tip (41), providing the automatic pipettor (42) with a second tip (41) and moving the second tip (41) to draw a defined quantity of eluent from an external source;
- moving the second tip (41) in the eluent orifice (12) and dispensing the eluent into the eluent reservoir (16);
- letting the mobile phase migration unfold for a time allowing sufficient mobile phase migration, corresponding to an appropriate eluent front position measured and verified by the optical system;
- discarding the second tip (41), providing the automatic pipettor (42) with a third tip (41), moving the third tip (41) into the driving orifice (11) and driving the TLC strip (6) out of the holder (7) towards and across the radioactivity detector (43) field of view in order to obtain a chromatogram, the driving velocity profile being adapted to the type of detector and activity level; and
- analysing the chromatogram and assessing the radiochemical purity of the radiolabelled compound.

8. The method according to claim 7, wherein the eluent comprises a mixture of organic or inorganic solvents, in different ratios.

9. The method according to claim 8, wherein the organic solvents are selected from the group consisting of acetonitrile, methanol, ethanol, acetic acid and ethyl acetate and the inorganic solvents are selected from the group consisting of water, saline, ammonium acetates and sodium citrate

10. The method according to claim 7, wherein the sample spot volume is between 0.5 and 5.0µL.

11. The method according to claim 7, wherein the sample spot volume is between 0.5 and 1.0µL.

## Patentansprüche

1. Vorrichtung zum Durchführen einer automatisierten radiochemischen Reinheitsanalyse von radioaktiv markierten Lösungsproben basierend auf einem Chromatogramm, das durch Dünnschichtchromatographie oder TLC erlangt wird, umfassend:
- eine TLC-Streifenhalteranordnung (20), hierin nachstehend bezeichnet als Halteranordnung, bestehend aus:
∘ einem Einweg-TLC-Streifen (6), umfassend eine obere Abdeckung (8) und ein unteres TLC-Band (9), wobei das TLC-Band (9) an einem ersten Ende in einem Dichtungsbereich (10) mit der oberen Abdeckung (8) versiegelt ist, wobei das andere Ende des TLC-Bands (9) in Form einer sich verjüngenden Spitze (14) ist, die frei ist, um von dem entsprechenden Ende der oberen Abdeckung (8) abgetrennt zu werden, wobei die obere Abdeckung (8) mit einer ersten Öffnung oder Antriebsöffnung (11), die sich an dem anderen Ende der oberen Abdeckung (8) befindet, einer zweiten Öffnung oder Eluentenöffnung (12), die sich oberhalb der sich verjüngenden Spitze (14) des TLC-Bands (9) befindet, und einer dritten Öffnung oder Tupföffnung (13), die sich oberhalb des TLC-Bands (9) in einem Abstand von der zweiten Öffnung (12) befindet, versehen ist;
∘ einen wiederverwendbaren TLC-Streifenhalter (7), hierin nachstehend bezeichnet als Halter, umfassend einen Eluentenbehälter (16), der sich unter einer oberen Fläche (15) befindet, wobei der Halter (7) ferner eine Öffnung (12') aufweist, die mit dem Eluentenbehälter (16) in Verbindung ist und mit der zweiten Öffnung (12) der oberen Abdeckung (8) zusammenpasst, wenn der TLC-Streifen (6) vollständig in den Halter eingeführt ist, und einen scharf geneigten Führungseingang (17) aufweist, um die sich verjüngende Spitze (14) des TLC-Bands (9) nach unten in den Eluentenbehälter (16) zu kanalisieren, wobei die sich verjüngende Spitze (14) beim Einsetzen in den Eluentenbehälter (16) von der oberen Abdeckung (8) getrennt wird, während der Rest des TLC-Streifens (6) durch Haltekerben (18) weiter geführt wird;
- einen stationären Radioaktivitätsdetektor (43), der in einer Linie mit dem Halter (7) angeordnet und mit Abschirmteilen (44) versehen ist;
- eine automatische Ausrüstung (40), umfassend einen Pipettierer (42), der in der Lage ist, Einwegpipettenspitzen (41) aufzunehmen, ein Fluid in jede Pipettenspitze (41) aufzuziehen und daraus abzugeben, und in der Lage ist, Pipettenspitzen (41)jeweils in der Tupföffnung (13), in der Eluentenöffnung (12) und in der Antriebsöffnung (11) zu positionieren, um, jeweils einen Punkt einer radioaktiv markierten Lösungsprobe auf das TLC-Band (9) abzugeben, dem Eluentenbehälter (16) einen Eluenten, auch mobile Phase genannt, bereitzustellen und den TLC-Streifen (6) entlang der Führungsrillen (18) und nach außerhalb des Halters (7) zu dem Radioaktivitätsdetektor (43) zu bewegen.

2. Vorrichtung nach Anspruch 1, **dadurch gekennzeichnet, dass** die obere Abdeckung (8) eine transparente Kunststofffolie ist und das TLC-Band (9) des TLC-Streifens (6) aus einer Aluminium- oder Kunststoffträgerfolie besteht, die mit einer stationären Phase, wie beispielsweise Kieselgel, C18-modifiziertem Kieselgel, Kieselgel mit chiralem Selektor, Aluminiumoxid, Polyamid oder aus einem mit Kieselgel imprägnierten Glasmikrofaser-Chromatographiepapier oder aus Zellulose beschichtet ist.

3. Vorrichtung nach Anspruch 1, wobei sie auch mit einem optischen System, wie beispielsweise einer Kamera, versehen ist, das die Eluentenvorderseite und alle visuellen Migrationsmerkmale entlang der TLC-Platte lokalisieren kann.

4. Vorrichtung nach Anspruch 1, wobei der wiederverwendbare Halter (7) auch eine Rille (19) umfasst, die einen Freiraum für das Ende der antreibenden Pipettenspitze (41) bereitstellt, während es den TLC-Streifen (6) in den Halter (7) hinein oder daraus heraus bewegt.

5. Vorrichtung nach Anspruch 1, wobei der Eluentenbehälter (16) konstruiert ist, um ein Eluentenvolumen zwischen 200 und 600 µl aufzunehmen.

6. Vorrichtung nach Anspruch 2, wobei die obere Kunststoffabdeckung (8) aus Polyethylen, COC für cyclisches Olefincopolymer oder Polyethylenterephthalat ist.

7. Verfahren zum Durchführen von automatisierter radiochemischer Reinheitsanalyse einer radioaktiv markierten Lösungsprobe durch TLC unter Verwendung der Vorrichtung nach einem der vorherigen Ansprüche, das Verfahren umfassend die folgenden aufeinanderfolgenden Schritte:
- Platzieren einer Halteranordnung, wobei der TLC-Streifen (6) anfänglich in dem Halter (7) positioniert ist, sodass die Eluentenöffnung (12) mit der Öffnung (12') des Eluentenbehälters (16) zusammenpasst, in der Vorrichtung nach Anspruch 1;
- Bereitstellen einer ersten Spitze (41) an den automatischen Pipettierer (42) und Entnehmen einer Probe einer radioaktiv markierten Verbindung;
- Bewegen der ersten Spitze (41) in der Tupföffnung (13) und Abgeben eines Punkts der radioaktiv markierten Verbindungsprobe auf die Oberfläche des TLC-Bands (9);
- Entsorgen der ersten Spitze (41), Bereitstellen einer zweiten Spitze (41) an den automatischen Pipettierer (42) und Bewegen der zweiten Spitze (41), um eine definierte Menge an Eluent von einer externen Quelle aufzuziehen;
- Bewegen der zweiten Spitze (41) in der Eluentenöffnung (12) und Abgeben des Eluenten in den Eluentenbehälter (16);
- Entfaltenlassen der Migration der mobilen Phase über eine Zeit, die eine ausreichende Migration der mobilen Phase ermöglicht, entsprechend einer geeigneten Eluentenvorderseitenposition, die von dem optischen System gemessen und überprüft wird;
- Entsorgen der zweiten Spitze (41), Bereitstellen einer dritten Spitze (41) an den automatischen Pipettierer (42), Bewegen der dritten Spitze (41) in die Antriebsöffnung (11) und Antreiben des TLC-Streifens (6) aus dem Halter (7) in Richtung und quer zu dem Sichtfeld des Radioaktivitätsdetektors (43), um ein Chromatogramm zu erlangen, wobei das Antriebsgeschwindigkeitsprofil an den Typ des Detektors und das Aktivitätsniveau angepasst ist; und
- Analysieren des Chromatogramms und Bewerten der radiochemischen Reinheit der radioaktiv markierten Verbindung.

8. Verfahren nach Anspruch 7, wobei das Eluent ein Gemisch aus organischen oder anorganischen Lösungsmitteln in unterschiedlichen Verhältnissen umfasst.

9. Verfahren nach Anspruch 8, wobei die organischen Lösungsmittel ausgewählt sind aus der Gruppe, bestehend aus Acetonitril, Methanol, Ethanol, Essigsäure und Ethylacetat, und die anorganischen Lösungsmittel ausgewählt sind aus der Gruppe, bestehend aus Wasser, Kochsalzlösung, Ammoniumacetaten und Natriumcitrat.

10. Verfahren nach Anspruch 7, wobei das Probenpunktvolumen zwischen 0,5 und 5,0 µl ist.

11. Verfahren nach Anspruch 7, wobei das Probenpunktvolumen zwischen 0,5 und 1,0 µl ist.

## Revendications

1. Dispositif destiné à analyser de façon automatisée la pureté radiochimique d'échantillons de solution radiomarqués sur la base d'un chromatogramme obtenu par chromatographie en couche mince, comprenant :
- un ensemble de support de lames de chromatographie en couche mince (20), désigné ci-après « ensemble de support », composé de :
∘ une lame jetable de chromatographie en couche mince (6) comprenant un cache supérieur (8) et une bande inférieure de chromatographie en couche mince (9), ladite bande de chromatographie en couche mince (9) étant contenue dans une zone étanche (10) à une première extrémité du cache supérieur (8), l'autre extrémité de la bande de chromatographie en couche mince (9) étant sous la forme d'une pointe effilée (14) qui peut être séparée de l'extrémité correspondante du cache supérieur (8), ledit cache supérieur (8) étant équipé d'un premier orifice ou orifice d'entraînement (11) situé à l'autre extrémité du cache supérieur (8), d'un deuxième orifice ou orifice à éluent (12) situé au-dessus de la pointe effilée (14) de la bande de chromatographie en couche mince (9) et d'un troisième orifice ou orifice de positionnement (13) situé au-dessus de la bande de chromatographie en couche mince (9), à une distance du deuxième orifice (12) ;
∘ un support réutilisable de lames de chromatographie en couche mince (7), désigné ci-après « support », comprenant un réservoir à éluent (16) situé sous une surface supérieure (15), ledit support (7) ayant en outre une ouverture (12') destinée à communiquer avec le réservoir à éluent (16) et correspondant au deuxième orifice (12) du cache supérieur (8) lorsque la lame de chromatographie en couche mince (6) est insérée en entier dans le support, et comprenant une entrée de guidage inclinée et nette (17) destinée à guider la pointe effilée (14) de la bande de chromatographie en couche mince (9) vers le bas dans le réservoir à éluent (16), la pointe effilée (14) étant séparée du cache supérieur (8) lors de l'insertion de celui-ci dans le réservoir à éluent (16), tandis que le reste de ladite lame de chromatographie en couche mince (6) reste guidé par les encoches de retenue (18) ;
- un détecteur de radioactivité stationnaire (43) aligné avec le support (7) et équipé d'éléments de protection (44) ;
- un équipement automatique (40) comprenant une pipette (42) capable de contenir des embouts de pipette jetables (41), afin d'aspirer ou de fournir un fluide dans chaque embout de pipette (41), et capable de positionner les embouts de pipette (41) respectivement dans l'orifice de positionnement (13), dans l'orifice à éluent (12) et dans l'orifice d'entraînement (11) afin de, respectivement, distribuer une petite quantité d'échantillon de solution radiomarqué sur la bande de chromatographie en couche mince (9), fournir un éluent, également appelé « phase mobile », au réservoir à éluent (16) et déplacer la lame de chromatographie en couche mince (6) le long des rainures de guidage (18) et hors du support (7) vers le détecteur de radioactivité (43).

2. Dispositif selon la revendication 1, **caractérisé en ce que** le cache supérieur (8) est une plaque de plastique transparent et **en ce que** la bande de chromatographie en couche mince (9) de la lame de chromatographie en couche mince (6) est composée d'une plaque de support en aluminium ou en plastique recouverte d'une phase stationnaire telle qu'un gel de silice, de silice modifiée en C18, de silice avec un sélecteur chiral, d'alumine, d'un polyamide, ou d'un papier de chromatographie en microfibres de verre imprégné d'un gel de silice, ou de cellulose.

3. Dispositif selon la revendication 1, **caractérisé en ce qu'**il est en outre équipé d'un système optique, tel qu'un appareil photo, qui peut localiser le front d'éluent et toute caractéristique de migration visuelle le long de la plaque de chromatographie en couche mince.

4. Dispositif selon la revendication 1, **caractérisé en ce que** ledit support réutilisable (7) comprend en outre une rainure (19) qui offre un dégagement à l'extrémité de l'embout de pipette d'entraînement (41) pendant qu'il déplace la lame de chromatographie en couche mince (6) dans ou hors du support (7).

5. Dispositif selon la revendication 1, **caractérisé en ce que** le réservoir à éluent (16) est conçu pour contenir un volume d'éluent compris entre 200 et 600 µl.

6. Dispositif selon la revendication 2, **caractérisé en ce que** le cache supérieur en plastique (8) est en polyéthylène, en copolymère de d'oléfine cyclique (COC) ou en polyéthylène téréphtalate.

7. Procédé de mise en œuvre d'une analyse de pureté radiochimique automatisée d'un échantillon de solution radiomarqué par chromatographie en couche mince, à l'aide du dispositif selon l'une quelconque des revendications précédentes, ledit procédé comprenant les étapes successives consistant à :
- placer un ensemble de support, avec une lame de chromatographie en couche mince (6) initialement positionnée dans le support (7) de sorte que l'orifice à éluent (12) corresponde avec l'ouverture (12') du réservoir à éluent (16), dans le dispositif selon la revendication 1 ;
- équiper la pipette automatique (42) d'un premier embout (41) et aspirer un échantillon d'un composé radiomarqué ;
- déplacer le premier embout (41) dans l'orifice de positionnement (13) et distribuer une petite quantité de l'échantillon de composé radiomarqué sur la surface de la bande de chromatographie en couche mince (9) ;
- jeter le premier embout (41), équiper la pipette automatique (42) d'un deuxième embout (41) et déplacer le deuxième embout (41) afin d'aspirer une quantité définie d'éluent depuis une source externe ;
- déplacer le deuxième embout (41) dans l'orifice à éluent (12) et distribuer l'éluent dans le réservoir à éluent (16) ;
- laisser la migration en phase mobile se dérouler pendant une durée qui permet une migration en phase mobile suffisante, correspondant à une position adéquate de front d'éluent mesurée et vérifiée par le système optique ;
- jeter le deuxième embout (41), équiper la pipette automatique (42) d'un troisième embout (41), déplacer le troisième embout (41) dans l'orifice d'entraînement (11) et entraîner la lame de chromatographie en couche mince (6) hors du support (7) vers et en travers du champ de vision du détecteur de radioactivité (43) afin d'obtenir un chromatogramme, le profil de vitesse d'entraînement étant adapté au type du détecteur et au niveau d'activité; et
- analyser le chromatogramme et évaluer la pureté radiochimique du composé radiomarqué.

8. Procédé selon la revendication 7, **caractérisé en ce que** l'éluent comprend un mélange de solvants organiques ou inorganiques, selon des rapports différents.

9. Procédé selon la revendication 8, **caractérisé en ce que** les solvants organiques sont choisis parmi le groupe consistant en de l'acétonitrile, du méthanol, de l'éthanol, de l'acide acétique et de l'acétate d'éthyle et les solvants inorganiques sont choisis parmi le groupe consistant en de l'eau, une solution saline, des acétates d'ammonium et du citrate de sodium.

10. Procédé selon la revendication 7, **caractérisé en ce que** le volume d'échantillon est compris entre 0,5 et 5 µl.

11. Procédé selon la revendication 7, **caractérisé en ce que** le volume d'échantillon est compris entre 0,5 et 1 µl.
